Europäisches Patentamt

European Patent Office

Office européen des brevets

(19)

(11) Numéro de publication : **0 359 612 B1**

(12) **FASCICULE DE BREVET EUROPEEN**

(45) Date de publication du fascicule du brevet :
**06.05.92 Bulletin 92/19**

(51) Int. Cl.⁵ : **A23L 1/28,** A23L 3/00,
A23B 7/06, A23B 7/153,
A23B 7/00

(21) Numéro de dépôt : **89402346.4**

(22) Date de dépôt : **28.08.89**

(54) **Procédé et dispositif pour réduire la perte de poids des légumes, notamment des champignons lors de l'appertisation, lasurgélation ou le saumurage.**

(30) Priorité : **30.08.88 FR 8811385**

(43) Date de publication de la demande :
**21.03.90 Bulletin 90/12**

(45) Mention de la délivrance du brevet :
**06.05.92 Bulletin 92/19**

(84) Etats contractants désignés :
**BE DE ES NL**

(56) Documents cités :
**EP-A- 0 121 579**
**EP-A- 0 252 155**
**FR-A- 1 412 459**
**FR-A- 2 227 833**
**US-A- 2 653 930**

(56) Documents cités :
**PATENT ABSTRACTS OF JAPAN, vol. 7, no. 39
(C-151)[1184], 17 février 1983
DERWENT FILE SUPPLIER WPI(L), 1980,
résumé no. AN-80-08656C, Derwent Publications Ltd, Londres, GB**

(73) Titulaire : **Bournier, Edgard
c/o Mme A.M. Ghauss 8, Avenue des
Grésillons
F-92600 Asnieres (FR)**

(72) Inventeur : **Bournier, Edgard
c/o Mme A.M. Ghauss 8, Avenue des
Grésillons
F-92600 Asnieres (FR)**

(74) Mandataire : **Portal, Gérard et al
Cabinet Beau de Loménie 55, rue
d'Amsterdam
F-75008 Paris (FR)**

## Description

La présente invention concerne un procédé et dispositif pour réduire la perte de poids des légumes et notamment des champignons lors de leur mise en conserve par appertisation, surgélation, saumurage.

Selon les techniques traditionnelles de préparation des légumes pour leur mise en conserve, les légumes sont presque toujours blanchis, c'est-à-dire trempés dans de l'eau bouillante pendant un certain temps, et de ce fait, ils abandonnent dans l'eau de blanchiement beaucoup d'acides aminés et d'éléments constitutifs sous forme de substances solubles dans l'eau qui sont génératrices de parfum, de saveur et de goût.

C'est ainsi que les champignons de Paris perdent jusqu'à 35 % de leurs poids de départ, soit 3 % de leur matière sèche soluble.

Les champignons de Paris contiennent beaucoup d'air inclus. Il suffit pour s'en persuader, de les voir flotter même avec leur racine et la terre y attenant.

Lors du trempage dans l'eau bouillante, l'air se réchauffe, se dilate, a tendance à s'échapper et ce faisant, entraîne avec lui une partie du liquide de constitution.

Il est connu pour y palier, notamment à partir de la demande de brevet européenne EP 0.140.767, d'imprégner les champignons avec une substance coagulant à chaud, qui en obstruant les espaces intracellulaires, bloquent les sucs des champignons qui ainsi, ne perdent plus de poids. Pour ce faire, il est utilisé du blanc d'oeuf, de l'amidon, du lactalbumine, de la lécitine, des gommes, des alginates, des polyphosphates etc... Mais tous ces additifs sont interdits d'utilisation alimentaire en France et un peu partout en Europe.

Le document FR 2 227 833 (THE CLOROX CO.) décrit un porcédé pour le conditionnement des champignons de conserve comprenant le trempage sous vide des champignons dans un milieu liquide (le liquide d'imprégnation utilisé étant un mélange d'huile et d'eau à 50 % chauffé à 45°C), un traitement thermique constitué principalement d'un séchage à l'air chaud et l'inactivation des enzymes réalisée par immersion des champignons dans de l'eau bouillante.

La présente invention permet d'éviter les inconvénients précédents pour la première fois et de manière satisfaisante, tant au niveau des pertes que des interdictions d'emploi, en proposant un procédé pour réduire la perte poids des légumes et notamment des champignons lors de leur mise en conserve comprenant l'imprégnation sous vide par un liquide suivie d'un traitement thermique, caractérisé en ce que l'imprégnation représente 60 à 80 % en poids du légume paré à sec et en ce que le traitement thermique consiste à durcir superficiellement les légumes par passage dans un four entre 300 et 600°C pendant une durée comprise entre 2 et 6 mn.

Selon une autre caractéristique du procédé de l'invention, le liquide d'imprégnation est essentiellement de l'eau salée, acidulée ou pure.

Toujours selon l'invention, on effectue après le traitement thermique, une cuisson pour obtenir dans le coeur du légume une température d'environ 80°C, de façon à coaguler l'albumine naturelle et à transformer les acides aminés.

Un autre objet de l'invention est un dispositif pour la mise en oeuvre du procédé qui comprend autant de fours qu'il y a de formats de conditionnement des champignons, chaque four comportant au moins deux zones, une première zone où la chaleur est produite par rayonnement infrarouge pour obtenir une température comprise entre 300 et 600°C, et une seconde zone où la température est plus faible pour obtenir une température d'environ 80°C dans le coeur du légume.

Dans la présente invention, l'air inclus est extrait en soumettant les champignons à un vide de l'ordre de 1333, 223874 à 26666, 447748 Pa (10 à 20 millimètres de mercure). Ce vide doit être maintenu 3 à 4 minutes et les champignons doivent être placés en couche de faible épaisseur (pas plus de 0,40 m à 0,50 m) dans une enceinte pouvant se clore hermétiquement et résister au vide.

L'air extrait est remplacé par de l'eau qui peut être salée ou acidulée avec de l'acide citrique ou ascorbique, à l'exclusion de tout autre produit, de façon à se conformer aux nouvelles réglementations. Cette eau pénètre dans les champignons lorsque le vide est cassé.

C'est ainsi qu'un kilo de champignons parés à sec peut, après lavage, peser 1120 grammes et après imprégnation à l'eau pure, peser jusqu'à 1900 grammes.

Dans la présente invention, les champignons sont imprégnés entre 60 et 80 % de leur poids à sec, et introduits en couche mince dans un four dont la première zone doit être chauffée entre 300 et 600°C. Il est préférable de prévoir un chauffage par infrarouge qui peut être obtenu par des résistances électriques ou par des plaques chauffées au rouge par du gaz.

Sous l'action de la chaleur, il se produit un durcissement superficiel de la chair des champignons que l'on appelle aussi "croûtage".

Ce durcissement s'oppose à la sortie des liquides de constitution des champignons. L'eau introduite dans le légume, par l'imprégnation sous vide, s'évapore avant que le croûtage ne soit définitivement terminé, car cette eau n'est pas liée, comme l'est le liquide de constitution des champignons. Ce phénomène permet d'éviter la carbonisation du champignon. Le croûtage doit être obtenu sur toute la surface des champignons, ce qui rend nécessaire de placer les champignons entre deux bandes chauffantes et d'accélerer les transferts de chaleur par une ventilation appropriée.

Le durcissement superficiel ou croûtage empêche les liquides de constitution des légumes de s'échapper.

Lorsque l'on déshydrate des légumes par de l'air chaud et que l'on chauffe à une température trop élevée des légumes qui ne sont pas assez humides, ceux-ci ne sèchent plus quelque soit le temps de leur séjour dans le séchoir. Les légumes gardant plus de 10 % d'humidité ne se conserveront pas correctement.

Après le croûtage qui, selon la grosseur des champignons et le degré de chaleur, peut être obtenu entre 2 et 6 minutes pour une température comprise entre 300 et 600°C, les champignons sont soumis à une température moins élevée (autour de 250°C) pour obtenir à coeur une température d'au moins 80°C, ce qui permet de coaguler l'albumine naturelle du champignon et de transformer les acides aminés.

Le poids est alors stabilisé et ne bougera pas lors de l'appertisation.

La mise en boîte peut suivre immédiatement la cuisson au four et être effectuée, comme à l'accoutumée, avec de l'eau salée acidulée ou à sec, à condition que le sertissage soit effectué avec un bon vide.

Soumis à une surgélation ultérieure, les champignons conservent beaucoup plus longtemps leur bon goût, sont moins sensibles aux changements de température, sont exempts de bisulfite de soude, et se comportent bien dans les gondoles des distributeurs.

De plus, il ne sont pas gorgés d'eau comme le sont les champignons surgelés crus.

Ce procédé a un gros avantage sur la méthode traditionnelle car il permet d'économiser de 30 à 35 % le poids de champignons frais. Le consommateur, pour un prix moins élevé, reçoit des champignons de meilleure qualité, mieux conservés et qui sont conformes aux réglementations en vigueur.

Le dispositif de la présente invention comporte deux unités : une première pour extraire l'air inclus et imprégner d'eau le légume, et une unité de chauffage comportant deux zones, une pour durcir superficiellement les champignons, et l'autre pour les cuire.

L'invention sera mieux comprise à la lecture de la description qui va suivre, accompagnée des dessins annexés sur lesquels :
– les Fig. 1 et 2 représentent l'unité pour extraire l'air inclus et imprégner les champignons et ;
– la Fig. 3 représente l'unité de chauffage.

Dans les procédés traditionnels de mise en conserve, on utilise parfois des colonnes atmosphériques pour extraires l'air et le remplacer par de l'eau, mais le vide est insuffisant et n'apporte que peu d'amélioration, au mieux un gain de 2 à 3 %.

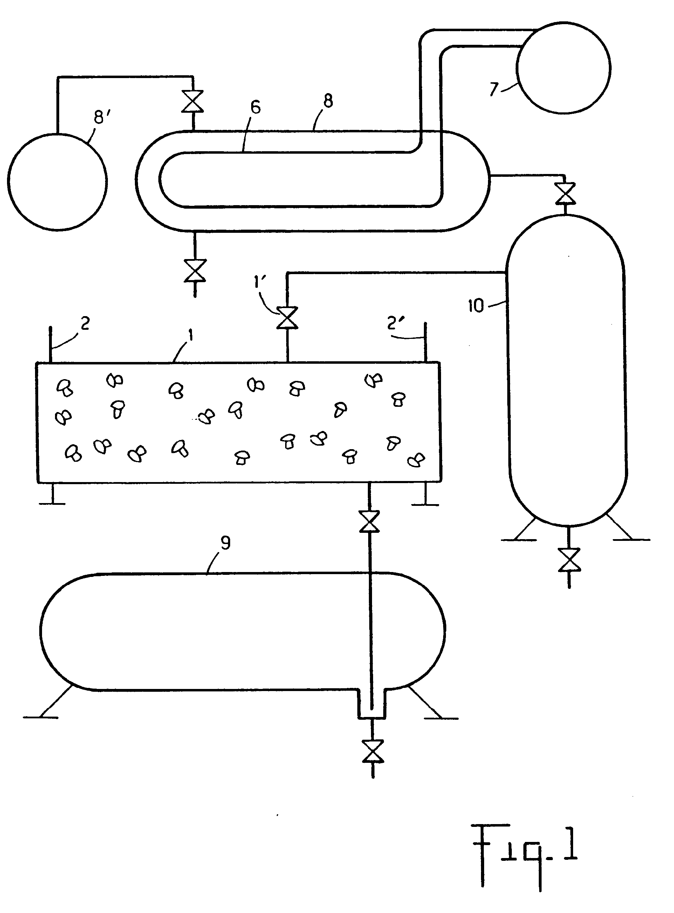

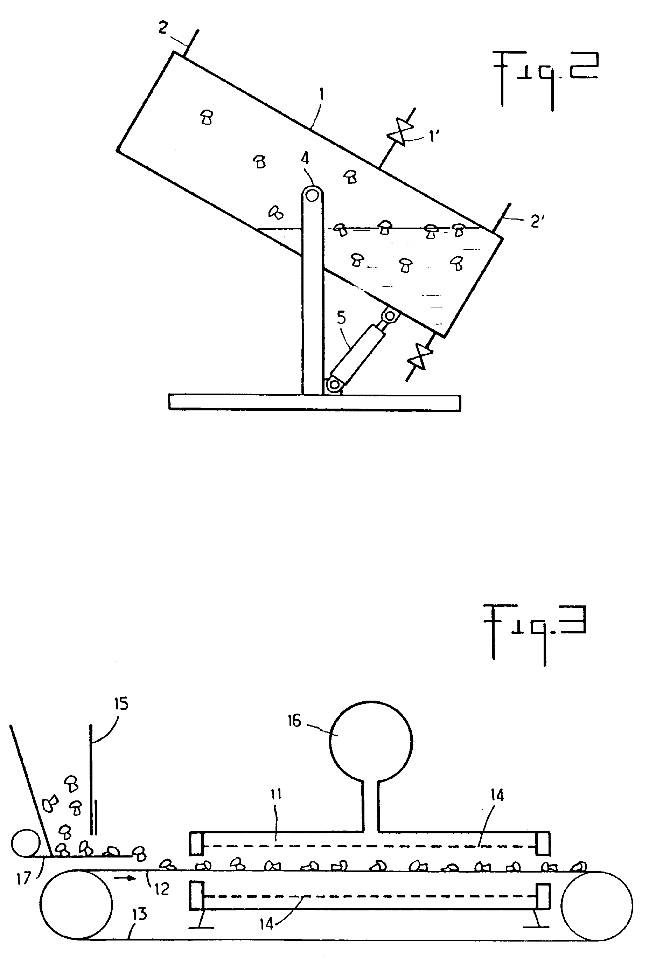

L'appareil représenté sur les figures 1 et 2 permet d'obtenir un meilleur vide que celui obtenu avec une colonne atmosphérique. Il se compose d'un tube (1) de 30 à 50 centimètres de diamètre, de 2 à 4 mètres de long, fermé aux deux extrémités par des vannes (2 et 2') à ouverture totale ou à fermeture autoclave.

Le tube est disposé horizontalement, et les champignons sont placés dans des cuves (3) en tôle perforée ou grillagée.

Ces cuves sont introduites dans le tube (1). D'un point de vue industriel, il est préférable que le tube (1) soit placé, au moment du chargement des champignons, en position inclinée à au moins 30°, et que les champignons soient déversés directement dans le tube. Un certain volume d'eau, dans le bas du tube, permet d'éviter des chocs brutaux contre le fond du tube. Le tube est muni dans sa partie centrale, de deux tourillons (4) et d'un vérin (5) qui permet de le ramener à l'horizontale pour que les champignons ne soient pas tassés pendant l'imprégnation sous vide. Le tube formant une enceinte close est mis en communication avec un réservoir à vide (10) au moyen de la vanne (1'), ce qui permet de diminuer le temps nécessaire pour obtenir le vide désiré. Après remplissage, la vanne basse (2) est fermée et le tube (1) est remis à l'horizontale au moyen du vérin (5).

Le réservoir à vide (10) est relié à une pompe à vide (7) par l'intermédiaire d'un condenseur (8) comprenant un tube étanche avec des tubulures (6) dans lesquelles circule un liquide réfrigérant refroidi à -20°C par un dispositif frigorifique (8). Ce condenseur protège la pompe à vide (7) en piègeant la vapeur d'eau contenue dans l'air extrait des champignons.

Le vide recherché est un vide qui n'est ni trop poussé, ni trop brutal pour ne pas abimer les champignons qui doivent rester entiers.

Ainsi il est souhaitable de ne pas descendre en dessous de 1333, 223874 Pa (10 mm de mercure). La quantité d'eau imprégnée doit représenter environ 60 à 80 % en poids du champignon paré à sec.

L'eau provenant du réservoir (9) est introduite ensuite doucement dans l'enceinte. Cette eau doit être en quantité suffisante pour que les champignons soient toujours bien recouverts, même après que le vide a été cassé et que l'eau a rempli les cavités, privées d'air, des champignons.

Il est souhaitable de prévoir une réserve dans le fond du réservoir d'eau (9) pour que le vide ne se casse pas de façon accidentelle, par manque d'eau. Il est également prévu une sécurité au niveau de la vanne (1') pour éviter que de l'eau ne passe du tube (1) au réservoir à vide (10). Le vide est cassé par la mise du tube (1) à l'atmosphère, et la remontée de pression provoque l'imprégnation des champignons.

Le tube (1) est ensuite incliné au moyen du vérin (5), et la vanne basse est ouverte pour vider le tube et transférer les champignons correctement imprégnés vers un calibreur qui les répartira selon leur diamètre pour être mis par la suite dans des boites de conserve de différentes tailles.

La figure 3 représente l'unité de chauffage. Le temps nécessaire au croûtage superficiel et à la cuisson à coeur étant nécessairement différent selon la taille des champignons , il est préférable d'utiliser autant de fours qu'il y a de formats de boite. Ces fours sont constitués d'une enceinte (11) qui peut être métallique calorifugée ou composée d'éléments réfractaires, briquetage ou ciment réfractaire.

Ces fours ont, par exemple, pour une production de 3 tonnes par heure , une longueur de 4 à 5 mètres sur 0,80 m à 1 m de large. Ces fours comprennent un tapis roulant métallique (12) dont la vitesse est variable et controlée automatiquement, et dont la bande de retour (13) est refroidie.

Des éléments thermiques tels que des batteries de résistance à infrarouge (14) ou des brûleurs sont placés au dessus et en dessous du tapis et portent au rouge des plaques métalliques réfractaires.

Les éléments thermiques sont en nombre et en puissance suffisants pour croûter rapidement les champignons et pour que toute la surface des champignons soit exposée à la chaleur. Pour parfaire le dispositif, un ventilateur centrifuge (16) fournit de l'air pulsé à une plaque perforée située sous le tapis pour obtenir une répartition de l'air chaud à travers la couche de champignons.

Les champignons seront étalés de préférence en une seule couche, et au maximum en deux couches, sur le tapis, avant l'entrée dans le four par le moyen d'une table vibrante (17) placée sous une trémie (15).

Chaque four comporte au moins deux zones ; une première zone où la température est comprise entre 300°C et 600°C et dans laquelle les champignons séjournent entre 2 et 6 mn, et une seconde zone où la température est d'environ 250°C dans laquelle les champignons sont cuits à coeur.

A la sortie des fours après contrôle de la température à coeur , les champignons sont emboîtés directement, jutés à l'eau salée acidulée traditionnelle, ou emboîtés sans jutage mais sertis sous vide. Il sera aussi possible d'éviter le sertissage sous vide mais alors de la chapelure ou de la poudre de bois blanc réchauffée à 80°C remplacera le jutage à l'eau.

Cette opération permet de conserver le goût des produits cuits au four.

Pour être surgelés ou mis en saumure légère, les champignons seront refroidis à l'air frais propre.

La ligne de fabrication pour la mise en oeuvre du procédé comprendra également à la sortie, des machines à parer, un bac de stockage pour régulariser l'alimentation rapide d'une enceinte de désaération. Il est même souhaitable de prévoir deux enceintes identiques en parallèle reliées toutes deux à un même condenseur pour éviter les temps morts.

**Revendications**

1. Procédé pour réduire la perte de poids des légumes et notamment des champignons lors de leur mise en conserve, comprenant l'imprégnation sous vide par un liquide suivie d'un traitement thermique, caractérisé en ce que l'imprégnation représente 60 à 80 % en poids du légume paré à sec et en ce que le traitement thermique consiste à durcir superficiellement les légumes par passage dans un four à rayonnement infra-rouge entre 300 et 600°C pendant une durée comprise entre 2 et 6 mn, puis à réaliser une cuisson à coeur du légume à une température d'environ 80°C, de façon à coaguler l'albumine naturelle et à transformer les acides aminés.

2. Procédé selon la revendication 1, caractérisé en ce que le liquide d'imprégnation est essentiellement de l'eau salée, acidulée ou pure.

3. Dispositif pour la mise en oeuvre du procédé qui comprend autant de fours qu'il y a de formats de conditionnement des champignons, chaque four comportant au moins deux zones, une première zone où la chaleur est produite par rayonnement infrarouge pour obtenir une température comprise entre 300°C et 600°C, et une seconde zone où la température est plus faible pour obtenir une température d'environ 80°C dans le coeur du légume.

**Patentansprüche**

1. Verfahren zum Verringern des Gewichtsverlustes der Gemüse und besonders der Pilze während ihrer Konservenverarbeitung, das die Vakuumimprägnierung mit einer Flüssigkeit mit nachfolgender Wärmebehandlung umfaßt, dadurch gekennzeichnet, daß die Imprägnierung 60 bis 80 Gew.-% des Gemüse-Trockengewichts ausmacht und daß die Wärmebehandlung aus einem oberflächlichen Härten der Gemüse mittels Durchlaufs durch einen Infrarotstrahlungsofen zwischen 300 und 600 °C während einer Dauer von 2 bis 6 min, danach der Durchführung eines Kochens im Kern des Gemüses bei einer Temperatur von etwa 80 °C derart besteht, um das natürliche Albumin zu koagulieren und die Aminosäuren umzuwandeln.

2. Verfahren nach dem Anspruch 1, dadurch gekennzeichnet, daß die Imprägnierflüssigkeit im wesentlichen salzhaltiges, angesäuertes oder reines Wasser ist.

3. Vorrichtung zur Durchführung des Verfahrens, die so viele Öfen aufweist, wie es Konditionierformate der Pilze gibt, wobei jeder Ofen wenigstens zwei Zonen umfaßt, eine erste Zone, wo die Wärme durch Infrarotstrahlung erzeugt wird, um eine Temperatur im Bereich von 300 °C bis 600 °C zu erhalten, und eine zweite Zone, wo die Temperatur niedriger ist, um eine Temperatur von etwa 80 °C im Kern des Gemüses zu erhalten.

**Claims**

1. Process for reducing weight loss of vegetables, notably mushrooms during canning, comprising impregnation in vacuo by a liquid followed by a heat treatment, characterized in that the impregnation represents 60 to 80% by weight of the dry-trimmed vegetable and in that the heat treatment consists in superficially hardening the vegetables by passing them in an infra-red oven at between 300 and 600°C for a period ranging between 2 and 6 mn, and in baking the vegtable to the core at a temperature of about 80°C, so as to coagulate the natural albumine and to transform the amino acids

2. Process according to claim 1, characterized in that the impregnation liquid is essentially salted, acidulated or pure water

3. Device for carrying out the process, comprising as many ovens as there are mushroom packing formats, each oven comprising at least two zones, a first zone in which the heat is produced by infra-red radiation in order to obtain a temperature ranging between 300°C and 600°C, and a second zone in which the temperature is lower in order to obtain a temperature of about 80°C in the core of the vegetable.

Fig.1

Fig.2

Fig.3